# EUROPÄISCHE PATENTSCHRIFT

(11) **EP 1 118 491 B1**
(45) Veröffentlichungstag und Bekanntmachung des Hinweises auf die Patenterteilung: **11.06.2003**
(21) Anmeldenummer: 01100285.4
(22) Anmeldetag: 04.01.2001
(51) Int. Cl.: B60J 10/08, E05D 7/00

(54) **Schwenktürflügel für Fahrzeuge, insbesondere für Busse**
Pivoting vehicle door wing, in particular for buses
Battant de porte d'un véhicule, notamment pour les autobus

(30) Priorität: 20.01.2000 DE 20000873 U
(43) Veröffentlichungstag der Anmeldung: 25.07.2001
(73) Patentinhaber: Gebrüder Bode GmbH & Co.KG, 34123 Kassel (DE)
(72) Erfinder: Horn, Manfred, 34260 Kaufungen 1 (DE)
(74) Vertreter: Feder, Wolf-Dietrich, Dr. Dipl.-Phys.

(56) Entgegenhaltungen:
- EP-A- 0 873 898
- DE-A- 3 242 966
- DE-A- 19 927 239
- DE-C- 10 029 275
- DE-U- 8 009 490

## Beschreibung

Die Erfindung betrifft einen Schwenktürflügel für Fahrzeuge, insbesondere für Busse, mit den Merkmalen aus dem Oberbegriff des Schutzanspruchs 1. Derartige Schwenktürflügel sind bekannt und, beispielsweise in DE 80 09 490 U1, beschrieben.

In EP 0 873 898A ist ein Schwenktürflügel für Fahrzeuge beschrieben, der an seiner unteren waagrechten Kante mit einer schwenkbaren Abdichtleiste versehen ist, die durchgehend aus gummielastischem Material oder Kunststoffmaterial besteht und an der in der geschlossenen Lage des Türflügels inneren Unterkante des Türflügels schwenkbar befestigt ist. Damit liegt die Drehachse der Abdichtleiste hinter der vertikalen Mittelebene des Türflügels.

Der Erfindung liegt die Aufgabe zugrunde, einen Schwenktürflügel der bekannten Bauart so weiterzubilden, daß er bei äußerst stabiler und wenig störungsanfälliger Konstruktion leicht montierbar und an Fahrzeugabmessungen anpassbar ist und eine gute Abdichtung gewährleistet.

Die Lösung dieser Aufgabe erfolgt erfindungsgemäß mit den Merkmalen aus dem kennzeichnenden Teil des

Patentanspruchs 1. Vorteilhafte Weiterbildungen der Erfindung sind in den abhängigen Ansprüchen beschrieben.

Wie bei dem bekannten Schwenktürflügel wird beim Verschwenken des Schwenktürflügels nach innen die Abdichtleiste durch den unteren Schwenkarm um etwa 90° nach außen verschwenkt, so daß in der Offenstellung des Schwenktürflügels die Abdichtleiste durch den Schwenkarm abgestützt ist. Bei einer besonders vorteilhaften Ausführungsform des Schwenktürflügels ist die Abdichtleiste als Profilleiste aus im wesentlichen starrem Material, beispielsweise als Aluminiumprofil, ausgebildet, und an der Unterkante der Abdichtleiste befindet sich ein Dichtungsblatt aus elastomerem Material, das, wie weiter unten anhand eines Ausführungsbeispiels näher erläutert, in seiner Breitenrichtung verschiebbar und feststellbar ist, um fahrzeugseitige Toleranzen abzufangen.

Weiterhin hat es sich als vorteilhaft erwiesen, den Zwischenraum zwischen der Unterseite des Schwenktürflügels und der Oberseite der Abdichtleiste durch eine Dichtungsmanschette zu verschließen, die im herabgeschwenkten Zustand der Abdichtleiste an der Vorderseite der Abdichtleiste anliegt und im hochgeschwenkten Zustand der Abdichtleiste in eine Auskehlung an der Außenseite der Abdichtleiste eingreift.

Im folgenden wird anhand der beigefügten Zeichnungen ein Ausführungsbeispiel für einen Schwenktürflügel nach der Erfindung näher erläutert.

In den Zeichnungen zeigen:
Fig. 1 den unteren Teil des Schwenktürflügels für eine Innenschwenktür von außen;
Fig. 2 in gegenüber Fig. 1 vergrößerter Darstellung einen Vertikalschnitt senkrecht zur Türebene durch den Einstiegsbereich eines Busses im Bereich der Unterkante des Türflügels;
Fig. 3 in schematisierter Darstellung einen Horizontalschnitt durch den Türflügel nach Fig. 1 in geschlossener und geöffneter Stellung.

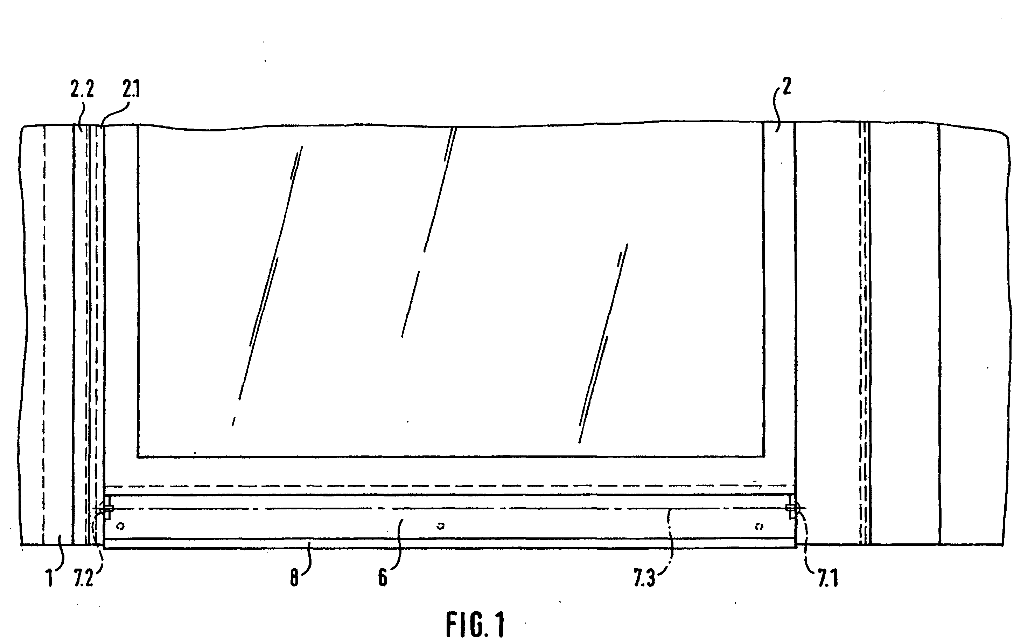

Als Ausführungsbeispiel wird eine Innenschwenktür eines Busses dargestellt, von der in Fig. 1 der Schwenktürflügel 2 dargestellt ist, der innerhalb eines Portals 1 angeordnet ist und an seiner dem Portal 1 zugewandten, vertikalen Kante eine Dichtung 2.1 aufweist, die im geschlossenen Zustand des Schwenktürflügels an der entsprechenden Dichtung 2.2 des Portals anliegt.

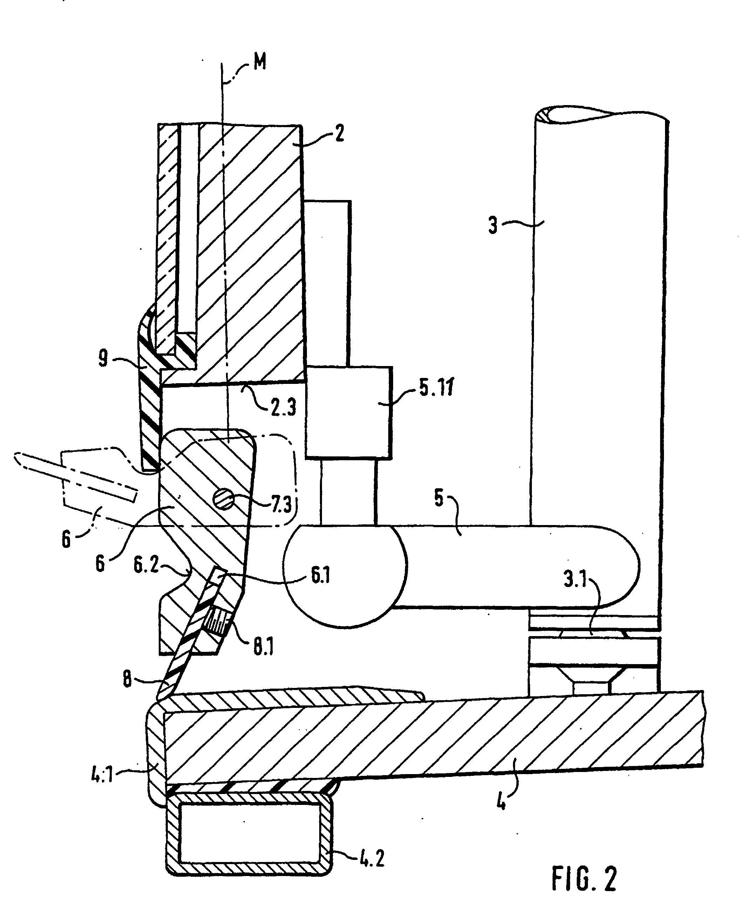

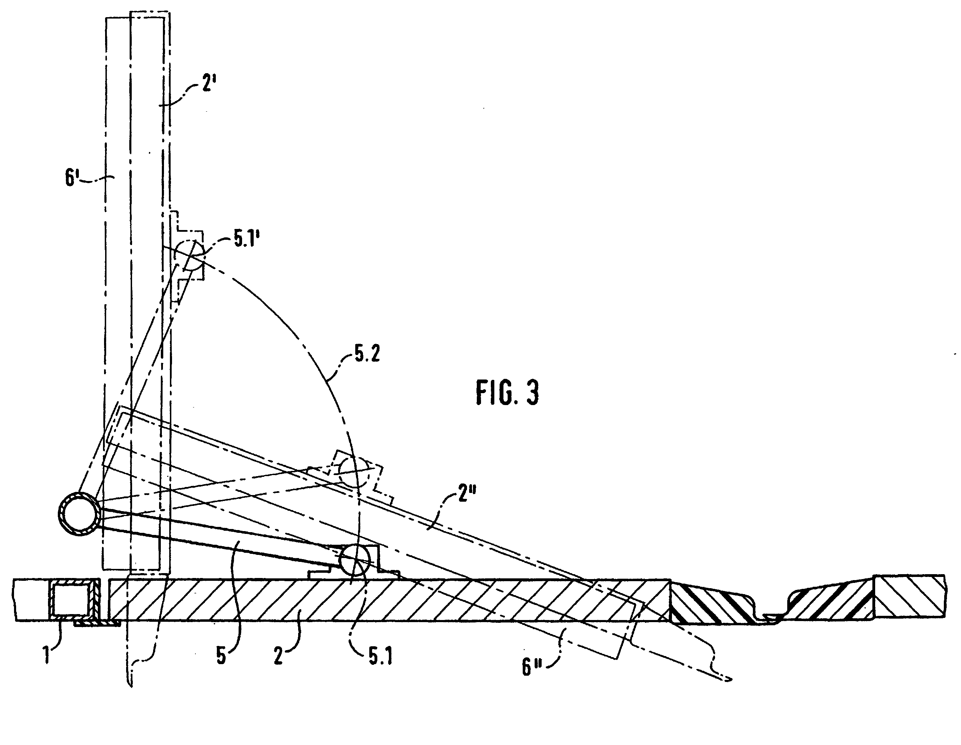

Das Öffnen und Schließen des Schwenktürflügels 2 geschieht in üblicher Weise von einer Drehsäule 3 aus, die drehbar über ein Lager 3.1 auf dem durch einen Träger 4.2 abgestützten Boden 4 des Fahrzeugs im Einstiegsbereich gelagert ist. Der Boden 4 fällt nach außen leicht ab und ist an der Einstiegskante von einem Trittprofil 4.1 umfaßt. Die Drehsäule 3 trägt einen oberen und unteren Schwenkarm, von denen der untere Schwenkarm 5 in Fig. 2 dargestellt ist. Dieser untere Schwenkarm 5 ist über ein Drehlager 5.11 gelenkig mit dem Schwenktürflügel 2 verbunden. Wie aus Fig. 3 zu ersehen, wird der Schwenktürflügel 2 beim Verschwenken des Schwenkarms 5 und unter der Wirkung nicht eigens dargestellter Führungen aus der in Fig. 3 mit 2 bezeichneten Geschlossenstellung in die mit 2' bezeichnete Offenstellung geführt. Die Drehachse 5.1 des Drehlagers 5.11 zwischen Schwenkarm und Schwenktürflügel wandert dabei auf der Bahn 5.2 bis in eine Stellung, die mit 5.1' bezeichnet ist. Eine Zwischenstellung des Schwenktürflügels bei etwa 10 % Öffnung ist mit 2" bezeichnet.

An der Unterkante des Schwenktürflügels 2 ist eine Abdichtleiste 6 angeordnet. Wie aus Fig. 1 zu entnehmen, erstreckt sich die Abdichtleiste 6 über die ganze Breite des Schwenktürflügels 2 und ist an ihren beiden Enden jeweils über ein Drehgelenk 7.1 und 7.2 am Schwenktürflügel 2 aufgehängt. Wie den Fig. 1 und 2 zu entnehmen, ist die Anordnung des unteren Schwenkarms 5 zur Abdichtleiste 6 derart, daß der Schwenkbereich des unteren Schwenkarms 5 unterhalb der Drehachse 7.3 der Abdichtleiste 6 liegt. Weiterhin ist die Drehachse 7.3, wie aus Fig. 2 ersichtlich, im Bereich zwischen der vertikalen Mittelebene M und der Außenkante des Schwenktürflügels 2 angeordnet. Die Abdichtleiste 6 besteht aus im wesentlichen starrem Material und ist beispielsweise als Aluminiumprofilleiste ausgebildet. An der Unterkante der Abdichtleiste 6 befindet sich ein, sich über die volle Länge der Abdichtleiste 6 erstreckendes Dichtungsblatt 8 aus elastomerem Material. Dieses Dichtungsblatt 8 ist in eine sich zur Unterkante der Abdichtleiste hin öffnende Nut 6.1 verschiebbar eingesetzt, so daß es in seiner Breitenrichtung verschiebbar ist, und es kann über eine sich über die Länge verteilende vorgegebene Anzahl von Gewindestiften 8.1 in einer vorgewählten Position festgelegt werden. Die Verschiebungsmöglichkeit kann beispielsweise +/- 10 mm betragen. Mittels dieser Verschiebung können fahrzeugseitige Toleranzen abgefangen werden.

Wie Fig. 2 zu entnehmen, ist das Dichtungsblatt in der Abdichtleiste 6 derart angeordnet, daß es mit der vertikalen Mittelebene M des Schwenktürflügels 2 einen vorgegebenen, nach außen gerichteten spitzen Winkel einschließt. Im geschlossenen Zustand der Tür legt sich das Dichtungsblatt 8 an das Trittprofil 4.1 im Einstiegsbereich des Fahrzeugbodens 4 an.

Beim Öffnen der Tür stößt der Schwenkarm 5 an die Innenseite der Abdichtleiste 6 und verschwenkt sie aus der in Fig. 2 mit durchgezogenen Linien dargestellten Stellung um etwa 90° nach außen in die mit strichpunktierten Linien dargestellte Stellung. In dieser Stellung liegt die Abdichtleiste 6 mit ihrer Innenseite auf der Oberseite des Schwenkarms 5 auf.

Die Anordnung und Einstellung ist derart, daß bei etwa 10 % Türöffnung die Schwenkbewegung der Abdichtleiste 6 nach außen abgeschlossen ist. In Fig. 3 ist diese Öffnungsstellung um etwa 10 % des Schwenktürflügels mit 2" und die Stellung der Abdichtleiste mit 6", bei voller Öffnung mit 6' bezeichnet. Zur Abdichtung des Zwischenraums zwischen der Unterkante 2.3 des Schwenktürflügels 2 und der Abdichtleiste 6 dient eine im Bereich der Unterkante 2.3 an der Außenseite des Schwenktürflügels angeordnete Dichtungsmanschette 9. Wie Fig. 2 zu entnehmen, liegt die Dichtungsmanschette 9 im herabgeschwenkten Zustand der Abdichtleiste 6 den Zwischenraum zwischen der Unterkante 2.3 des Schwenktürflügels 2 und der Oberkante der Abdichtleiste 6 überdeckend an der Vorderseite der Abdichtleiste 6 an. Im hochgeschwenkten Zustand der Abdichtleiste 6 greift die Dichtungsmanschette 9 mit ihrer Unterkante in eine an der Außenseite der Ab-dichtleiste vorgesehene, sich in deren Längsrichtung erstreckende Auskehlung 6.2 ein, so daß das Hoch-schwenken der Abdichtleiste 6 nicht behindert wird.

## Patentansprüche

1. Schwenktürflügel für Fahrzeuge, insbesondere für Busse, der mit Hilfe von durch eine Drehsäule (3) betätigten Schwenkarmen nach innen verschwenkbar ist und an dessen Unterkante eine Abdichtleiste (6) um eine Drehachse (7.3) parallel zur Unterkante schwenkbar angeordnet ist, wobei der untere Schwenkarm (5) so angeordnet ist, daß sein Schwenkbereich unterhalb der Drehachse (7.3) der Abdichtleiste (6) liegt, **dadurch gekennzeichnet, daß** die sich über die ganze Breite des Schwenktürflügels (2) erstreckende Abdichtleiste (6) an ihren beiden Enden jeweils über ein Drehgelenk (7.1, 7.2) am Schwenktürflügel (2) aufgehängt ist, wobei die Drehachse (7.3) im Bereich zwischen der vertikalen Mittelebene (M) des Schwenktürflügels (2) und seiner Außenkante angeordnet ist und die Abdichtleiste (6) als Profilleiste aus im wesentlichen starrem Material ausgebildet ist, in deren Unterkante ein sich über die volle Länge der Profilleiste erstreckendes Dichtungsblatt (8) aus elastomerem Material in seiner Breitenrichtung verschiebbar und feststellbar eingesetzt ist.

2. Schwenktürflügel nach Anspruch 1, **dadurch gekennzeichnet, daß** die Richtung des Dichtungsblattes (8) mit der vertikalen Mittelebene (M) des Schwenktürflügels (2) einen vorgegebenen, nach außen gerichteten spitzen Winkel einschließt.

3. Schwenktürflügel nach Anspruch 1 oder 2, **dadurch gekennzeichnet, daß** das Dichtungsblatt (8) in eine sich zur Unterkante der Abdichtleiste (6) hin öffnende Nut (6.1) verschiebbar eingesetzt und in dieser durch Gewindestifte (8.1) festlegbar ist.

4. Schwenktürflügel nach einem der Ansprüche 1 bis 3, **dadurch gekennzeichnet, daß** Abdichtleiste (6) und Schwenkarm (5) so zueinander angeordnet sind, daß ab einer Türöffnung von 10 % die Abdichtleiste (6) um 90° nach außen verschwenkt ist und die Abdichtleiste (6) auf der Oberseite des unteren Schwenkarms (5) aufliegt.

5. Schwenktürflügel nach einem der Ansprüche 1 bis 4, **dadurch gekennzeichnet, daß** die Abdichtleiste (6) an ihrer Außenseite eine in Längsrichtung verlaufende Auskehlung (6.2) aufweist, in die im hochgeschwenkten Zustand der Abdichtleiste (6) eine an der Außenseite des Schwenktürflügels (2) im Bereich der Unterkante (2.3) angeordnete Dichtungsmanschette (9) eingreift, die im herabgeschwenkten Zustand der Abdichtleiste (6) den Zwischenraum zwischen der Unterkante (2.3) des Schwenktürflügels (2) und der Oberkante der Abdichtleiste (6) überdeckend an der Vorderseite der Abdichtleiste (6) anliegt.

## Claims

1. Hinged door wing for vehicles, in particular for buses, that can be swivelled inwards with the aid of swivel arms actuated by a rotating column (3) and at whose lower edge a sealing strip (6) is swivellably disposed around an axis of rotation (7.3) parallel to the lower edge, wherein the lower swivel arm (5) is disposed in such a way that its swivelling region lies below the axis of rotation (7.3) of the sealing strip (6), **characterized in that** the sealing strip (6) extending over the entire width of the hinged door wing (2) is suspended at each of its two ends by means of a rotating link (7.1, 7.2) on the hinged door wing (2), wherein the axis of rotation (7.3) is disposed in the region between the vertical central plane (M) of the hinged door wing (2) and its outer edge, and the sealing strip (6) is designed as a profiled strip composed of essentially rigid material into whose lower edge a sealing leaf (8) of elastomeric material extending over the entire length of the profiled strip is inserted displaceably and fixably in its width direction.

2. Hinged door wing according to Claim 1, **characterized in that** the direction of the sealing leaf (8) encloses a specified, outwardly directed acute angle with the vertical central plane (M) of the hinged door wing (2).

3. Hinged door wing according to Claim 1 or 2, **characterized in that** the sealing leaf (8) is displaceably inserted in a groove (6.1) opening towards the lower edge of the sealing strip (6) and can be fixed in the latter by threaded pins (8.1).

4. Hinged door wing according to any of Claims 1 to 3, **characterized in that** the sealing strip (6) and the swivel arm (5) are disposed with respect to one another in such a way that, from a door opening of 10% onwards, the sealing strip (6) is swivelled outwards through 90° and the sealing strip (6) rests on the upper side of the lower swivel arm (5).

5. Hinged door wing according to any of Claims 1 to 4, **characterized in that** the sealing strip (6) has a channel (6.2) that extends in the longitudinal direction on its outside and in which there engages, in the swivelled-upwards state of the sealing strip (6), a sealing collar (9) that is disposed on the outside of the hinged door wing (2) in the region of the lower edge (2.3) and that, in the swivelled-downwards state of the sealing strip (6), rests against the front of the sealing strip (6) covering the gap between the lower edge (2.3) of the hinged door wing (2) and the upper edge of the sealing strip (6).

## Revendications

1. Battant de porte pour des véhicules, en particulier pour des autobus, pouvant être pivoté vers l'intérieur au moyen de bras orientables actionnés par une colonne rotative (3) et dont le rebord inférieur est muni d'un listeau d'étanchéité (6) agencé avec faculté de pivotement autour d'un axe de rotation (7.3) parallèle au rebord inférieur, le bras orientable inférieur (5) étant ainsi agencé que sa plage de pivotement se trouve en dessous de l'axe de rotation (7.3) du listeau d'étanchéité (6), **caractérisé en ce que** :
- le listeau d'étanchéité (6) qui s'étend sur toute la largeur du battant de porte (2) est accroché au battant de porte (2) par ses deux extrémités, respectivement par une articulation pivotante (7.1, 7.2), l'axe de rotation (7.3) étant agencé dans la zone entre le plan médian vertical (M) du battant de porte (2) et son rebord extérieur ; et
- le listeau d'étanchéité (6) est réalisé comme listeau profilé en un matériau essentiellement rigide et dont le rebord inférieur reçoit une feuille d'étanchéité (8) en matériau élastomère s'étendant sur toute la longueur du listeau profilé, ladite feuille étant déplaçable en direction de sa largeur et réglable.

2. Battant de porte selon la revendication 1, **caractérisé en ce que** la direction de la feuille d'étanchéité (8) forme un angle aigu prédéterminé et dirigé vers l'extérieur, avec le plan médian vertical (M) du battant de porte (2).

3. Battant de porte selon l'une ou l'autre des revendications 1 et 2, **caractérisé en ce que** la feuille d'étanchéité (8) est placée mobile dans une gorge (6.1) qui s'ouvre vers le rebord inférieur du listeau d'étanchéité (6) et peut être immobilisée dans celle-ci par des tiges filetées (8.1).

4. Battant de porte selon l'une des revendications 1 à 3, **caractérisé en ce que** le listeau d'étanchéité (6) et le bras orientable (5) sont agencés l'un par rapport à l'autre de telle manière que le listeau d'étanchéité (6) bascule de 90° vers l'extérieur à partir d'une ouverture de porte de 10%, et que le listeau d'étanchéité (6) repose sur la face supérieure du bras orientable inférieur (5).

5. Battant de porte selon l'une des revendications 1 à 4, **caractérisé en ce que** le listeau d'étanchéité (6) présente sur sa face extérieure une rigole (6.2) qui s'étend en direction longitudinale et dans laquelle s'engage une manchette d'étanchéité (9) agencée sur la face extérieure du battant de porte (2) dans la zone du rebord inférieur (2.3) lorsque le listeau d'étanchéité (6) est basculé vers le haut, ladite manchette venant en contact avec la face avant du listeau d'étanchéité (6) en recouvrant l'espace entre le rebord inférieur (2.3) du battant de porte (2) et le rebord supérieur du listeau d'étanchéité (6), lorsque le listeau d'étanchéité (6) est basculé vers le bas.
